# EUROPEAN PATENT APPLICATION

(11) **EP 1 250 838 A2**
(43) Date of publication of application: **23.10.2002**
(21) Application number: 02076475.9
(22) Date of filing: 16.04.2002
(51) Int. Cl.: A01K 5/02

(54) **A device for supplying feed to animals**

(30) Priority: 20.04.2001 NL 1017888
(71) Applicant: Lely Enterprises AG, 6300 ZUG (CH)
(72) Inventor: van den Berg, Karel, 2971 BR Bleskensgraaf (NL)
(74) Representative: Corten, Maurice Jean F.M.

(57) **Abstract**

A device for supplying feed to animals, which device is provided with a hopper for the feed, a feeding parlour, and conveying means for conveying feed from the hopper to the feeding parlour, said device being adapted to be positioned relative to a bottom on which an animal cam stand. The conveying means comprise a first conveyor for conveying feed upwards from a hopper. The first conveyor has a supply end. The feeding parlour may be constituted by a feeding trough having a shape that widens from the entrance opening. Additionally or alternatively the conveying means are arranged such that the supply end is movable from and towards each of the feeding parlours. Additionally or alternatively the distance between a feeding trough and a bottom portion is adjustable. An assembly of such a device and a bottom portion, the bottom portion being provided with means for adjusting the orientation of the bottom portion relative to the bottom, and with means for locking the bottom portion in an adjusted position. Alternatively or additionally the bottom portion is located above the bottom. Additionally or alternatively the bottom portion slopes obliquely downwards away from the device.

## Description

The invention relates to a device for supplying feed to animals according to the preamble of claim 1.

Such a device is known from Dutch patent application 1010898. Although this known device functions satisfactorily in practice, in the case that a mixture of different types of feed has to be supplied to an animal, the device appears not to be able to supply an accurately metered mixture within a certain time for making the device function sufficiently fast.

It is an object of the invention to obviate this drawback at least partially.

According to the invention, for that purpose a device for supplying feed to animals of the above-described type comprises the measures according to the characterizing part of claim 1. Due to the fact that the first conveyor conveys the feed upwards, there appears to be obtained a highly accurate metering as well as a quick supply of the feed.

Although the feed may be conveyed directly from the first conveyor to the feeding parlour, it is advantageous, inter alia for reasons of mixing feed, when the device is provided with a receptacle, the first conveyor conveying an amount of feed from the hopper to the receptacle.

An embodiment of a device according to the invention is characterized in that the receptacle is provided with a weighing device for measuring feed present in the receptacle. Thus it is possible to establish the amount of feed that can be supplied to the feeding parlour. Thus it is also possible to realise an accurate composition of the mixture.

Although the feed may be taken out of the receptacle by means of a separate taking-out device, for the sake of simplicity of the construction it is advantageous when there is not used a separate device for taking out. There may be used a tiltable receptacle, feed falling from said receptacle after the latter has been tilted. However, for improving the hygienic use of the device, the receptacle has preferably a bottom which is adapted to be opened. There is preferably provided a control means for controlling the opening of the bottom.

Although the amount of feed may be conveyed directly from the receptacle to the feeding parlour, it is constructionally advantageous when the conveying means comprise a second conveyor for conveying the amount of feed from the receptacle to the feeding parlour.

In a preferred embodiment the second conveyor is constituted by a tube-shaped chute respectively a channel-shaped chute, in other words, the receptacle is located above the feeding parlour. As a result thereof, there is no separate drive mechanism required for conveying the feed, because the gravitational force causes the feed to flow to the feeding parlour.

The invention is in particular advantageous when the feeding parlour is constituted by a feeding trough.

A device according to the invention may be applied inter alia to milking robots. However, the invention is in particular advantageous when the device is constituted by a feeding column, in which situation several animals can make use of the device at the same time. For that purpose the feeding column is provided in a manner known per se with several feeding troughs that may be disposed for example side by side.

A compact device is obtained when the feeding column is provided with a framework located around the central axis, to which framework substantially the feeding troughs and hoppers are fitted.

For the purpose of obtaining a compact device each hopper has a discharge end, a discharge end corresponding with the relevant supply end of the first conveyor. A particularly compact construction is obtained when the discharge ends of the hoppers alternately stagger in height, the arrangement being such that the discharge ends of juxtaposed hoppers partially overlap each other in a projective view. The device is preferably provided with a plurality of feeding troughs disposed on a framework located around a central axis.

When a first number of the feeding troughs are disposed on the framework in a lower position than a second number of the feeding troughs, a large number of feeding troughs may be provided within a limited space when in a projective view there is an overlap between the feeding troughs of the first and the second number. In the latter case the conveyance of feed to the first number of feeding troughs is simplified when above at least one of the feeding troughs of the first number there is provided a third conveyor for conveying feed from the second conveyor to the feeding trough.

The third conveyor is preferably disposed so as to be rotatable around the central axis, so that a small number of third conveyors, preferably one, will suffice.

The second conveyor is preferably disposed so as to be rotatable around the central axis, so that a small number of second conveyors, preferably one, will suffice.

In a preferred embodiment the third conveyor is constituted by a tube-shaped chute respectively a channel-shaped chute, in other words the receptacle is located above the feeding parlour. As a result thereof there is not required a separate drive mechanism for conveying the feed, the gravitational force causing the feed to flow towards the feeding parlour.

For the purpose of giving animals of different heights access to a feeding trough in a simple manner, in an embodiment of a device according to the invention the height of a feeding trough relative to the bottom is adjustable.

A preferred embodiment of a device according to the invention is characterized in that the device is provided with identification means for identifying an individual animal, so that the device can function automatically. For feeding animals by means of the device, an animal is identified, after which the feed is composed with the aid of a feed metering device from ingredients originating from one or more hoppers, according to the nutritive need of the individual animal, and the feed is supplied to the feeding parlour via the receptacle and the conveying means. By means of the weighing device the amount of feed can be attuned to the nutritive need of the individual animal. In this situation the control means preferably controls the functioning of the relevant components of the device. Especially the height of the feeding trough is automatically adjustable with the aid of data from the identification means.

To prevent an animal from being disturbed by another animal during eating from a feeding trough, there is disposed a partition between two adjacent feeding troughs.

Because animals come in the immediate vicinity of the partition, it is highly appropriate when a reading device for a step counter is disposed in the partition. Such step counters are used inter alia for measuring on the basis of the number of steps whether or not an animal is on heat.

To prevent animals standing side by side from leaning too much against each other, an embodiment of a device according to the invention is provided with at least one partition frame extending from a feeding trough over a distance that equals at least approximately half of the average length of an animal. The partition frame is preferably made of stainless steel.

The eating behaviour of animals appears to be influenced positively when the feeding trough has an entrance opening for the head of an animal, while the feeding trough has a shape that widens from the entrance opening. Although, in particular when several feeding troughs are disposed around a central axis, this seems illogical on first thoughts because the space available for feeding troughs on the contrary decreases towards the axis, this shape appears to have enormous, unexpected advantages in relation to the feed intake of animals.

To make the feeding parlours recognisable for animals, even in the situation of a small quantity of environmental light, the device is provided with a lighting disposed behind a feeding parlour. There is preferably provided one central lighting for all feeding troughs.

The device is preferably provided with means for combating vermin. In this connection may be taken into consideration ventilators for chasing away flies or other insects; loudspeakers for chasing away mice and the like.

Both the hygiene and the storage life of the feed are improved when the device is provided with means for preventing the formation of condensation in the device. Such means may comprise a ventilator and/or heating and/or air conditioning.

To be able also to promote the feed intake of animals even at high temperatures and/or high atmospheric humidity, it is advantageous when the device is provided with means for cooling an animal.

When the device is used for dairy animals it is advantageous when the device is provided with means for giving the animal a signal indicating that the animal is expected at a milking robot. After a certain period of training this signal results in that a dairy animal goes to a milking robot of its own will. This may be promoted by closing the feeding trough and by offering the animal only feed in the milk box. It will be obvious that such signals indicating that a dairy animal is expected at a milking robot may also be issued at other places in a shed or the like where an animal may be present. Thus the invention also relates to a device for accommodating a dairy animal, said device comprising a milking robot, characterized in that the device is provided with signal issuing means for issuing a signal that a dairy animal is expected at a milking robot.

To prevent excrement from flowing in a direction towards the device, it is advantageous when the bottom slopes downwards in a direction away from the device. This appears also to give the animals a pleasant sensation. Additionally or alternatively the bottom has a raised bottom portion on which the animal can stand.

In an embodiment of a device according to the invention, the device is provided with an animal height measuring means for measuring the height of an animal. Such an animal height measuring means may be constituted by a camera or a light grid, in which situation the measuring means are disposed e.g. in the partition. Thus it is possible to establish inter alia the growth of an animal. When an animal is grown up and does not grow any more, the animal recognition device (or identification device) may be used to find out the height of an animal. For that purpose a memory comprises a table containing the height per animal. The height of the feeding trough is preferably adjusted with the aid of data from the animal height measuring means.

In order to obtain alternative or additional data about the growth and/or health of an animal, the device is provided with an animal weighing means. The animal weighing means is preferably integrated into the bottom portion. For that purpose a weighing floor known per se may be used.

An embodiment of a device according to the invention, said device being provided with a feed metering device, said feed metering device supplying feed in metered portions with the aid of data from an animal identification device and feeding data stored in a computer, is characterized in that the animal weighing means respectively the animal height measuring means comprises a data conveying means for conveying measurement data to the computer, and in that the computer is provided with a memory containing average growth data for the relevant animal species, preferably in the form of correspondence tables, in relation to weight in dependence of age, and/or in relation to height in dependence of age, and/or in relation to the amount of feed per day per animal in dependence of age, and/or historical growth data of an animal, the feed metering device supplying feed in metered portions with the aid of at least one of said data. In this manner the amount of feed can be adapted during the growth of the animal on the basis of measured and historical data, in particular after comparison with the average growth data of the animal species.

Although the feeding trough may be mounted on the device so as to be adjustable in height, it is also possible to make the -bottom portion adjustable in height. Thus the invention also relates to an assembly of a device as claimed in any one of the preceding claims and a bottom portion on which an animal can stand for making use of the device, the bottom portion being included in the bottom, characterized in that the bottom portion is provided with means for adjusting the orientation of the bottom portion relative to the bottom, and means for locking the bottom portion in an adjusted position.

The assembly is preferably provided with identification means for identifying an individual animal, the adjusting means being controlled with the aid of data from the identification means. To ensure that an animal during eating stands less often in excrement, the assembly has a bottom portion on which an animal can stand for making use of the device, the bottom portion being included in the bottom, and the bottom portion being located above the bottom. Alternatively or additionally the bottom portion slopes obliquely downwards away from the device.

The invention will now be explained in further detail with reference to an embodiment shown in the drawing.
Figure 1 is a partially cut-away, schematic front view of an embodiment of a device according to the invention,
Figure 2 is a side view of the embodiment shown in Figure 1, and
Figure 3 is a schematic side view of a receptacle with weighing device suitable for use in a device according to the invention.

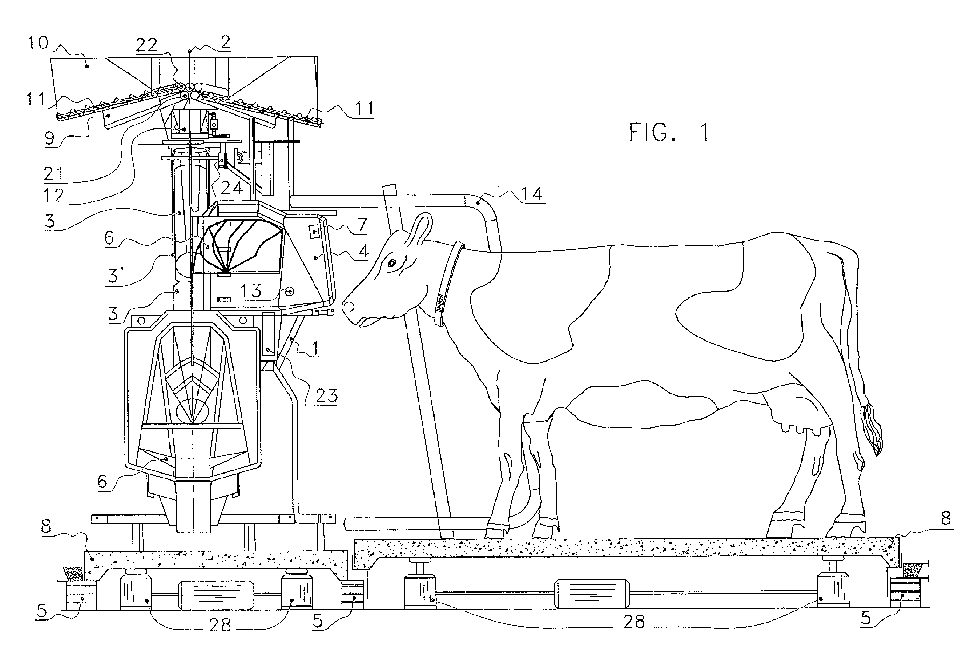

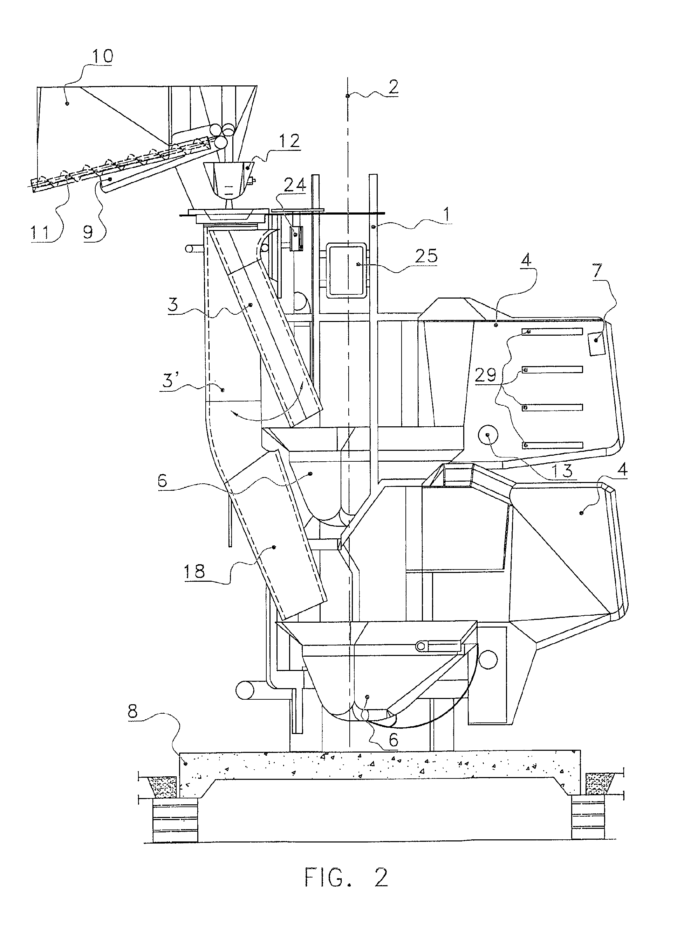

Figure 1 shows schematically a device for supplying feed to animals, in particular but not exclusively cows. The device comprises a framework 1 which, in the embodiment depicted in Figures 1 and 2, is disposed around a central axis 2 and has a substantially circular circumference. At the upper side of the framework 1 there are located hoppers 9, 10. For the installation of the hoppers 9, 10 there are made not further shown provisions on the framework 1. The device is adapted to be placed in a position, in other words can be positioned, on a bottom 5, preferably having a bottom portion 8, on which an animal can stand.

The framework 1 is preferably provided with partitions 4 between adjacent feeding troughs 6. The partitions 4 are possibly detachably disposed on the framework 1. The partitions prevent an animal from being disturbed by another animal during eating from a feeding trough 6. Because cows eating from a feeding trough 6 come in the immediate vicinity of the partition 4, there is provided a reading device 13 in the partition 4 for reading the data in a step counter fitted to the cows. Such step counters are used inter alia for measuring on the basis of the number of steps whether or not an animal is on heat.

Partition frames 14 (one of which is shown in Figure 1) extend from the feeding trough over a distance that equals at least approximately half of the average length of a cow. The partition frame is preferably made of stainless steel, although other materials such as synthetic material may be applied as well. The partition frames 14 prevent animals standing side by side from leaning too much against each other.

In the embodiment shown feeding troughs 6 for the animals are disposed in circular arrangement around the axis 2 in the lower part of the device. By means of the geometry of the device, in the embodiment shown constituted by a feeding column, it is achieved that the construction occupies little space, while the accessibility of the feeding column to the animals is optimal from all directions. For the sake of compactness a first number of the feeding troughs 6 are disposed on the framework in a lower position than a second number of the feeding troughs 6. As is apparent from Figure 1, the feeding troughs of the first number overlap the feeding troughs of the second number in a projective view.

The feeding column is further provided with conveying means comprising a first conveyor 11 and a second conveyor 3, 3' for conveying feed from the hopper 9 respectively 10 to the relevant feeding trough 6. A receptacle 12 receives an amount of feed which is conveyed by the first conveyor 11 from the hopper 9, 10 to the receptacle 12. As a first conveyor 11, an auger, gripper, belt conveyor or any other device known per se for conveying feed may be used. According to the invention the first conveyors 11 convey feed from a hopper 9, 10 upwards for obtaining a highly accurate metering. The first conveyors 11 have supply ends corresponding with the discharge ends 21 respectively 22 of the hoppers 9 respectively 10. In the embodiment shown the hoppers 9, 10 are disposed around the central axis 2. The discharge ends 21 and 22 of the hoppers 9, 10 alternately stagger in height, the arrangement being such that the discharge ends of juxtaposed hoppers 9, 10 partially overlap each other in a projective view, as is apparent from Figure 1.

A second conveyor 3, 3', preferably constituted by a tube-shaped chute respectively a channel-shaped chute, is suitable for conveying the amount of feed from the receptacle 12 to the relevant feeding trough 6. Above the feeding troughs 6 of the first number, so the lower feeding troughs 6, there is provided a third conveyor 18, preferably constituted by a tube-shaped chute respectively a channel-shaped chute, for conveying feed from the second conveyor 3, 3' to the feeding trough 6. Although there may be provided a separate third conveyor 18 per feeding trough 6 of the first number, the third conveyor 18 is preferably disposed so as to be rotatable around the central axis 2. The rotation is effected by a drive member 23, e.g. constituted by an electric motor.

In an analogous manner the second conveyor 3, 3' is disposed so as to be rotatable around the central axis 2; this rotation may be driven by a motor 24. Moreover, the second conveyor 3, 3' is movable from a position in which the feeding troughs of the second number can be filled to a position in which the feeding troughs of the first number can be filled, as is apparent from Figure 2.

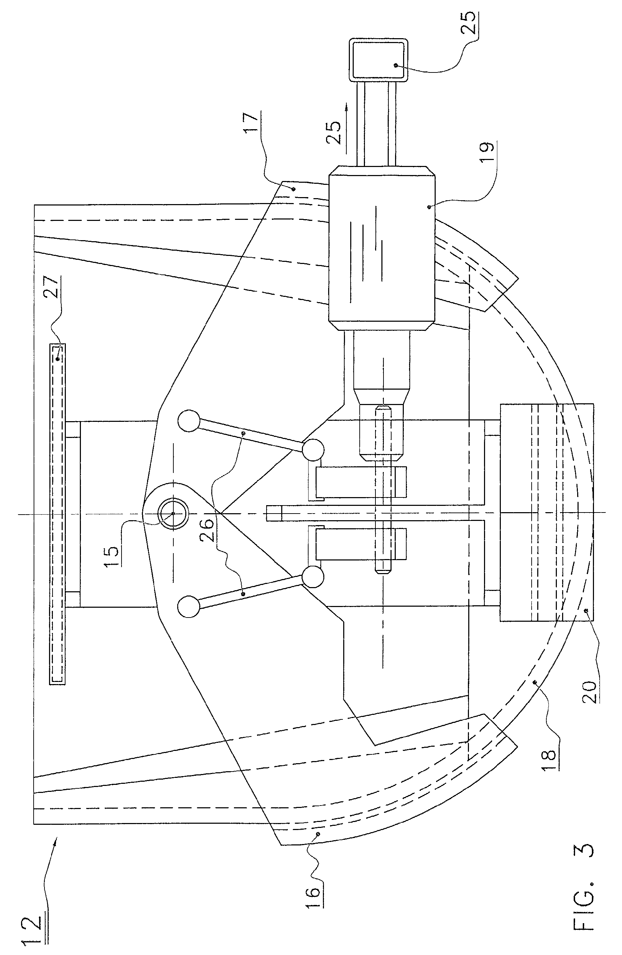

For conveying the feed to the tube-shaped chute 3, 3', the receptacle 12 has a bottom which is adapted to be opened. In the embodiment shown in Figure 3 this is realised in that the bottom of the receptacle 12 is constituted by two halves 16 and 17 which are pivotable about an axis 15. When the halves 16, 17 move away from each other, there is created an aperture 18 through which the feed falls into the tube-shaped chute 3, 3'.

The device comprises a drive member 19 for controlling the opening of the bottom. The drive member 19 is controlled by a computer 25 which also controls the order of functioning of the first and second conveyors 11 respectively 3, 3'.

The receptacle 12 is provided with a weighing device 20 known per se for measuring feed present in the receptacle 12. The weighing device 20 may be a load cell on which the receptacle 12 bears via e.g. a leaf spring 27 and a rod assembly 26.

There are provided identification means 7 for identifying an individual animal. In the embodiment shown the identification means 7 are disposed in the partitions 4, but it will be obvious that the identification means may also be disposed at other places, such as e.g. the feeding troughs 6. With the aid of the identification means 7 the identity of an animal present at a feeding trough 6 is determined automatically. With the aid of correspondence tables stored in the memory of e.g. the computer, it is possible to supply e.g. the amount of feed intended for that animal. Said amount may be determined with the aid of the weighing device 20. With the aid of data from the animal identification means 7 the computer further controls the movement of the tube-shaped chute 3 so that the latter is located over the right feeding trough 6. The computer further controls the drive of the conveyors 11.

For the purpose of giving animals of different heights access to a feeding trough 6 in a simple manner, the height of a feeding trough 6 relative to the bottom 5 is adjustable. To that end a feeding trough may be disposed on the framework 1 so as to be movable in height, said movement being realised by e.g. a motor controlled by the computer 25. For controlling the motor for moving the feeding troughs in height, the computer 25 may use data from the animal recognition respectively the animal identification means 7.

Alternatively the bottom portion 8 of the bottom 5 may be moved upwards or downwards by means of a lifting device 28. A raised bottom portion 8, even when it is constituted by a permanently raised bottom portion 8, has the advantage that the cow has not to stand unnecessarily in excrement. Especially for that purpose the bottom portion 8 slopes downwards in a direction away from the device, as schematically shown in Figure 1.

When the device according to the invention is suitable for feeding calves, or other animals that are growing, it is advantageous when there is provided an animal height measuring means for measuring the height of an animal. Such an animal height measuring means may e.g. be constituted by a camera or a light grid. In Figure 2 there are provided measuring strips 29 (or sensors in the form of strips) which may be used for height measurement, and possibly for the control of the mutual height adjustment of feeding trough and bottom portion.

The information from the height measuring means 29 may also be used for controlling a feed metering device supplying feed in metered portions partially with the aid of data from the animal identification device 7 and feeding data stored in the computer 25. In this situation also the information from an animal weighing device, e.g. a bottom portion designed as a weighing floor. For that purpose the animal height measuring means and the weighing means comprise a data conveying means for conveying measurement data to the computer. The computer is provided with a memory containing average growth data for the animal species, preferably in the form of correspondence tables, in relation to weight in dependence of age, and/or in relation to height in dependence of age, and/or in relation to the amount of feed per day per animal in dependence of age, and/or historical growth data of an animal, the feed metering device supplying feed in metered portions with the aid of at least one of said data.

Although, in particular with the device as shown in Figures 1 and 2 in which several feeding troughs 6 are disposed around the central axis 2, this seems illogical on first thoughts because the space available for feeding troughs on the contrary decreases towards the axis, a feeding trough having a shape that widens from the entrance opening thereof towards the central axis 2, appears to have enormous, unexpected advantages in relation to the feed intake of animals. In this situation the degree of widening is especially such that the front part of the head of the cow has relatively much lateral freedom, and the entrance opening is just large enough to allow the passage of the head.

The invention is not limited to the above-described embodiments, but it will be obvious that supplements and modifications within the scope of the claims are possible. The device may e.g. be provided with a lighting disposed behind a feeding trough, preferably a central lighting for all feeding troughs. Besides, the device may be provided with means for combating vermin, and/or means for preventing the formation of condensation in the device, and/or means for cooling an animal. Especially when the device is used by dairy animals, it has appeared to be advantageous when the device is provided with means for giving the animal a signal indicating that the animal is expected at a milking robot. Therefore, the invention also relates to each of the mentioned embodiments per se. A partition frame may e.g. also be applied independently of the upward conveyance of feed in the hoppers. In particular the invention also relates to a device for accommodating a dairy animal, said device comprising a milking robot, characterized in that the device is provided with signal issuing means for issuing a signal that a dairy animal is expected at the milking robot. Said signal issuing means may be disposed at various strategic places in or outside a shed. Further it will be obvious that a number of the feeding troughs may also be arranged as drinking troughs, in which situation colour and/or design may be used for enabling an animal to distinguish feeding troughs from drinking troughs. The invention is further described with reference to a feeding trough as a feeding parlour, but it will be obvious that the invention is not limited thereto.

## Claims

1. A device for supplying feed to animals, such as cows, said device being provided with:
a hopper (9, 10) for containing a stock of feed,
a feeding parlour (6) which is accessible to an animal, and
conveying means (3, 3'; 11; 18) for conveying feed from the hopper (9, 10) to the feeding parlour (6), the device being adapted to be positioned relative to a bottom (5, 8) on which an animal can stand,
**characterized in that** the conveying means comprise a first conveyor (11) for conveying feed upwards from a hopper (9, 10), the first conveyor (11) having a supply end for supplying feed to be conveyed to the feeding parlour (6).

2. A device as claimed in claim 1, **characterized in that** the device is provided with a receptacle (12), the first conveyor (11) conveying an amount of feed from the hopper (9, 10) to the receptacle (12).

3. A device as claimed in claim 1 or 2, **characterized in that** the receptacle (12) is provided with a weighing device (20) for measuring feed present in the receptacle (12).

4. A device as claimed in claim 2 or 3, **characterized in that** the receptacle (12) has a bottom (16, 17) which is adapted to be opened.

5. A device as claimed in claim 4, **characterized in that** there is provided a control means (25) for controlling the opening of the bottom (16, 17) of the receptacle (12).

6. A device as claimed in any one of the preceding claims, **characterized in that** the conveying means comprise a second conveyor (3, 3') for conveying the amount of feed from the receptacle (12) to the feeding parlour (6).

7. A device as claimed in claim 6, **characterized in that** the second conveyor (3, 3') is constituted by a tube-shaped chute respectively a channel-shaped chute.

8. A device as claimed in any one of the preceding claims, **characterized in that** the device comprises a plurality of hoppers (9, 10), said hoppers (9, 10) being disposed on a framework (1) which is located around a central axis (2).

9. A device as claimed in claim 8, **characterized in that** each hopper (9, 10) has a discharge end (21, 22), a discharge end corresponding with the relevant supply end of the first conveyor (11).

10. A device as claimed in claim 9, **characterized in that** the discharge ends (21, 22) of the hoppers (9, 10) alternately stagger in height, the arrangement being such that the discharge ends (21, 22) of juxtaposed hoppers (9, 10) partially overlap each other in a projective view.

11. A device as claimed in any one of the preceding claims, **characterized in that** the feeding parlour is constituted by a feeding trough (6).

12. A device as claimed in claim 11, **characterized in that** the device is provided with a plurality of feeding troughs (6) disposed on a framework (1) which is located around a central axis (2).

13. A device as claimed in claim 12, **characterized in that** a first number of the feeding troughs (6) are disposed on the framework (1) in a lower position than a second number of the feeding troughs (6).

14. A device as claimed in claim 13, with reference to claim 6 or 7, **characterized in that** above at least one of the feeding troughs (6) of the first number there is provided a third conveyor (18) for conveying feed from the second conveyor (3, 3') to the feeding trough (6).

15. A device as claimed in claim 14, **characterized in that** the third conveyor (18) is disposed so as to be rotatable around the central axis (2).

16. A device as claimed in claim 6, 7, 13 or 14, **characterized in that** the second conveyor (3, 3') is disposed so as to be rotatable around the central axis (2).

17. A device as claimed in claim 13, 14 or 15, **characterized in that** the third conveyor (18) is constituted by a tube-shaped chute respectively a channel-shaped chute.

18. A device as claimed in any one of the preceding claims 11 through 17, **characterized in that** the height of a feeding trough (6) relative to the bottom (5, 8) is adjustable.

19. A device as claimed in any one of the preceding claims, **characterized in that** the device is provided with identification means (7) for identifying an individual animal.

20. A device as claimed in claims 18 and 19, **characterized in that** the height of the feeding trough (6) is automatically adjustable with the aid of data from the identification means (7).

21. A device as claimed in claim 12, **characterized in that** there is disposed a partition (4) between two adjacent feeding troughs (6).

22. A device as claimed in claim 21, **characterized in that** in the partition (4) there is disposed a reading device (13) for a step counter.

23. A device as claimed in any one of the preceding claims 12, 13 or 21, **characterized in that** the device is provided with at least one partition frame (14) extending from a feeding trough (6) over a distance that equals at least approximately half of the average length of an animal.

24. A device as claimed in claim 23, **characterized in that** the partition frame (14) is made of stainless steel.

25. A device as claimed in any one of the preceding claims 12 through 24, with reference to claim 11, **characterized in that** the feeding trough (6) has an entrance opening for the head of an animal, the feeding trough (6) having a shape that widens from the entrance opening.

26. A device as claimed in any one of the preceding claims, **characterized in that** the device is provided with a lighting disposed behind a feeding parlour (6).

27. A device as claimed in claims 12 and 26, **characterized in that** there is provided one central lighting for all feeding troughs (6).

28. A device as claimed in any one of the preceding claims, **characterized in that** the device is provided with means for combating vermin.

29. A device as claimed in any one of the preceding claims, **characterized in that** the device is provided with means for preventing the formation of condensation in the device.

30. A device as claimed in any one of the preceding claims, **characterized in that** the device is provided with means for cooling an animal.

31. A device as claimed in any one of the preceding claims, **characterized in that** the device is provided with means for giving the animal a signal indicating that the animal is expected at a milking robot.

32. A device as claimed in any one of the preceding claims, **characterized in that** the bottom (5, 8) slopes downwards in a direction away from the device.

33. A device as claimed in any one of the preceding claims, **characterized in that** the bottom (5) has a raised bottom portion (8) on which the animal can stand.

34. A device as claimed in any one of the preceding claims, **characterized in that** the device is provided with an animal height measuring means (29) for measuring the height of an animal.

35. A device as claimed in claims 18 and 34, **characterized in that** the height is adjusted with the aid of data from the animal height measuring means (29).

36. A device as claimed in any one of the preceding claims, **characterized in that** the device is provided with an animal weighing means.

37. A device as claimed in claims 33 and 36, **characterized in that** the animal weighing means is integrated into the bottom portion (8).

38. A device as claimed in any one of claims 34 through 37, **characterized in that** the device is provided with a feed metering device, said feed metering device supplying feed in metered portions with the aid of data from an animal identification device (7) and feeding data stored in a computer (25), **characterized in that** the animal weighing means respectively the animal height measuring means (29) comprises a data conveying means for conveying measurement data to the computer (25), **in that** the computer (25) is provided with a memory containing average growth data for the animal species, preferably in the form of correspondence tables, in relation to weight in dependence of age, and/or in relation to height in dependence of age, and/or in relation to the amount of feed per day per animal in dependence of age, and/or historical growth data of an animal, the feed metering device supplying feed in metered portions with the aid of at least one of said data.

39. An assembly of a device as claimed in any one of the preceding claims and a bottom portion (8) on which an animal can stand for making use of the device, the bottom portion (8) being included in the bottom (5), **characterized in that** the bottom portion (8) is provided with means (28) for adjusting the orientation of the bottom portion relative to the bottom, and means for locking the bottom portion in an adjusted position.

40. An assembly as claimed in claim 39, **characterized in that** the assembly is provided with identification means (7) for identifying an individual animal, the adjusting means (28) being controlled with the aid of data from the identification means (7).

41. An assembly of a device as claimed in any one of the preceding claims 1 through 38, and a bottom portion (8) on which an animal can stand for making use of the device, the bottom portion (8) being included in the bottom (5), **characterized in that** the bottom portion (8) is located above the bottom (5).

42. An assembly of a device as claimed in any one of the preceding claims 1 through 38, and a bottom portion (8) on which an animal can stand for making use of the device, the bottom portion (8) being included in the bottom (5), **characterized in that** the bottom portion (8) slopes obliquely downwards away from the device.
